# EUROPÄISCHE PATENTSCHRIFT

(11) **EP 0 935 719 B1**
(45) Veröffentlichungstag und Bekanntmachung des Hinweises auf die Patenterteilung: **08.12.2004**
(21) Anmeldenummer: 98945000.2
(22) Anmeldetag: 16.07.1998
(51) Int. Cl.: F16K 15/02, F16K 27/02, F16K 15/04

(54) **RÜCKSCHLAGVENTIL, INSBESONDERE FÜR EINE KOLBENPUMPE**
NON-RETURN VALVE, ESPECIALLY FOR A PISTON PUMP
CLAPET ANTI-RETOUR DESTINE NOTAMMENT A UNE POMPE A PISTON

(30) Priorität: 11.09.1997 DE 19739904
(43) Veröffentlichungstag der Anmeldung: 18.08.1999
(73) Patentinhaber: ROBERT BOSCH GMBH, 70442 Stuttgart (DE)
(72) Erfinder: BARTUSSEK, Walter, D-87448 Waltenhofen (DE); HEUSINKVELD, Jörg, D-87509 Immenstadt (DE); HÜBER, Hubert, D-87480 Weitnau (DE); RITTLER, Werner, D-87509 Immenstadt (DE); HÄCKER, Jürgen, D-71706 Markgröningen (DE); OTT, Harald, D-71229 Leonberg (DE); AICHER, Harald, D-87544 Blaichach (DE)
(86) Internationale Anmeldenummer: PCT/DE1998/001996
(87) Internationale Veröffentlichungsnummer: WO 1999/013252

(56) Entgegenhaltungen:
- DE-A- 19 622 123
- US-A- 3 580 275
- US-A- 3 854 496
- US-A- 3 895 647
- US-A- 5 299 598

## Beschreibung

### Stand der Technik

Die Erfindung geht aus von einem Rückschlagventil nach der Gattung des Hauptanspruchs.

Ein derartiges Rückschlagventil, das insbesondere für einen Ölkreislauf eines Verbrennungsmotors vorgesehen ist, ist bekannt aus der US-A-3854496.

### Vorteile der Erfindung

Durch die vorgeschlagene Konstruktion wird eine spanende Nachbearbeitung vermieden.

Das Ventilgehäuse des erfindungsgemäßen Rückschlagventils mit den Merkmalen des Anspruchs 1 weist nach innen abstehende Führungsrippen zur Führung des Ventilschließkörpers auf. Das vorzugsweise scheibenförmig ausgebildete Halteelement ist, beispielsweise durch Einpressen in axialer Richtung in das Ventilgehäuse, an diesen Führungsrippen angebracht. Zwischen einem Außenrand des Halteelements und einer Innenseite einer Umfangswand des Ventilgehäuses besteht ein radialer Abstand, also ein Zwischenraum, durch den Fluid hindurchströmen kann. Es besteht ein großer Durchströmquerschnitt, insbesondere wenn das Verschlußelement mit einer oder mehreren Durchströmöffnungen versehen ist. Mit dem Zwischenraum kann trotz gewünschtem großem Durchströmquerschnitt auf vorteilhafte Weise eine insgesamt kleine Baugröße des Rückschlagventils erreicht werden.

Weil das Rückschlagventil so ausgebildet werden kann, daß sich der Durchströmquerschnitt in dem Zwischenraum auch bei stark ausgelenktem Ventilschließkörper nicht verkleinert, neigt der Ventilschließkörper weniger zum Schwingen, was vorteilhafterweise die Geräuschbildung verringert und die Haltbarkeit des Rückschlagventils verlängert.

Die Unteransprüche haben vorteilhafte Ausgestaltungen und Weiterbildungen der im Hauptanspruch angegebenen Erfindung zum Gegenstand.

Durch Umformen des Ventilgehäuses im Bereich des Halteelements radial nach innen wird ein Halt des Halteelements im Ventilgehäuse vergrößert (Anspruch 7).

Das erfindungsgemäße Rückschlagventil ist vorzugsweise bei einer Kolbenpumpe, insbesondere als Ein- und/oder Auslaßventil der Kolbenpumpe vorgesehen (Ansprüche 10, 11, 12). Die Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylidner oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenen Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

### Zeichnung

Die Erfindung wird nachfolgend anhand in der Zeichnung dargestellter Ausführungsbeispiele näher erläutert. Es zeigen:
- Figur 1: eine Ansicht eines erfindungsgemäßen Rückschlagventils,
- Figur 2: einen Achsschnitt des in eine fluidführende Bohrung eingesetzten Rückschlagventils aus Figur 1,
- Figur 3: eine Stirnansicht auf eine Ausströmseite des erfindungsgemäßen Rückschlagventils gemäß Pfeil III in Figur 2,
- Figur 4: eine Einzelheitdarstellung einer abgewandelten Ausführungsform des erfindungsgemäßen Rückschlagventils gemäß Pfeil IV in Figur 2,
- Figur 5: eine Kolbenpumpe mit einem Rückschlagventil gemäß der Erfindung im Achsschnitt, und
- Figur 6: einen Schnitt durch einen Hydraulikblock einer Fahrzeugbremsanlage gemäß der Erfindung.

### Beschreibung der Ausführungsbeispiele

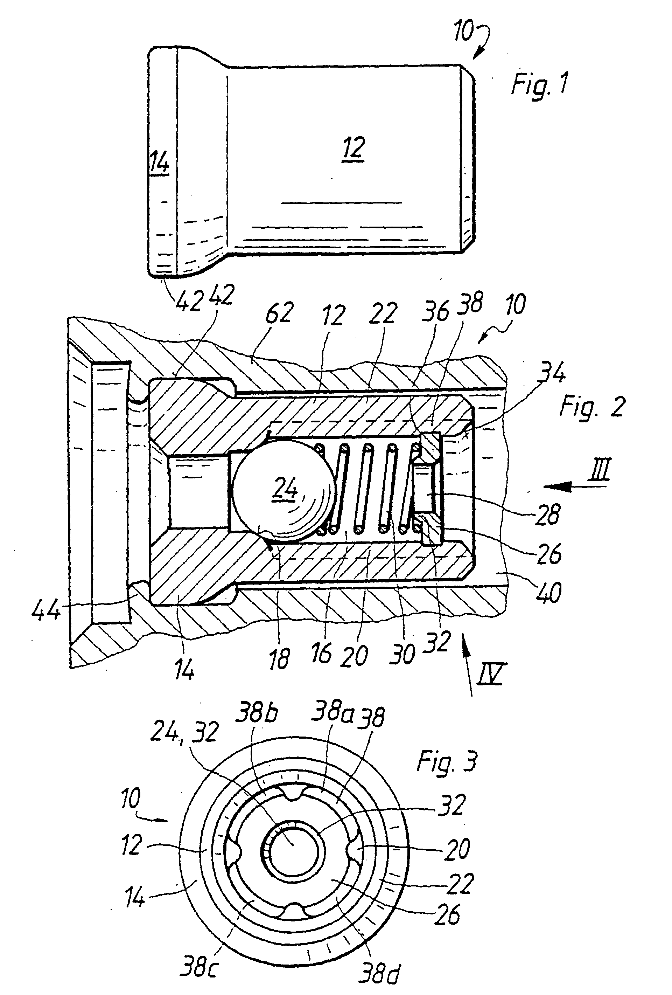

'Das in Figuren 1 bis 3 dargestellte, erfindungsgemäße Rücklagventil 10 weist ein Ventilgehäuse 12 mit einem radial überstehenden, umlaufenden Dichtbund 14 an einem zuströmseitigen Ende auf. Aus Platzgründen und um bei wenig Materialbedarf eine große Stabilität zu erreichen, ist das in der Zeichnung dargestellte, bevorzugt ausgewählte Ventilgehäuse rohrförmig gestaltet.

Ein axiales Durchgangsloch 16 erweitert sich in einer Durchströmrichtung an einer umlaufenden Ringschulter, die einen Ventilsitz 18 bildet. Beim bevorzugt ausgewählten Ausführungsbeispiel ist der Ventilsitz 18 konvex ballig gestaltet, kann aber auch beispielsweise kegelstumpfförmig sein. Vom Ventilsitz 18 weg in Strömungsrichtung, d. h. zu einem abströmseitigen Ende des Rückschlagventils 10 hin weist das Ventilgehäuse 12 mehrere, vorzugsweise drei bis sechs, insbesondere vier Führungsrippen 20 auf, welche von einer Innenseite einer Umfangswand 22 des Ventilgehäuses 12 radial nach innen abstehen. Die Führungsrippen 20 sind vorzugsweise äquidistant auf dem Umfang verteilt angeordnet. Sie führen einen Ventilschließkörper, der im dargestellten Ausführungsbeispiel als Ventilkugel 24 ausgebildet ist, mit geringem Radialspiel zwischen den Führungsrippen 20 im Ventilgehäuse 12.

Nahe des abströmseitigen Endes ist eine Lochscheibe 26 mit einem Mittelloch 28 im Ventilgehäuse 12 angebracht. Sie schließt die Ventilkugel 24 zwischen sich und dem Ventilsitz 18 im Ventilgehäuse 12 ein. Eine Schraubendruckfeder als Ventilschließfeder 30 stützt sich gegen die Lochscheibe 26, welche ein Verschlußelement des Gehäuses 12 bildet, ab, und drückt die Ventilkugel 24 gegen den Ventilsitz 18. Die Lochscheibe 26 ist ein Blechstanz- bzw. Prägeteil, bzw. Kunststoffspritzteil an dem ein das Mittelloch 28 umgebender Kragen 32 ausgebildet ist, der die Ventilschließfeder 30 zentriert. Die vom Ventilgehäuse 12 gehaltene Lochscheibe sorgt dafür, daß die Ventilkugel 24 nicht aus dem Durchgangsloch 16 herausfällt. Weil die Lochscheibe 26 die Ventilkugel 24 im Ventilgehäuse 12 hält, kann die Lochscheibe 26 auch als Halteelement bezeichnet werden.

Bei den für die Beschreibung bevorzugt ausgewählten Ausführungsbeispielen spannt die Ventilschließfeder 30 die Ventilkugel 24 mit geringer Vorspannung gegen den Ventilsitz 18. In manchen Fällen, wenn keine die Ventilkugel 24 gegen den Ventilsitz 18 beaufschlagende Vorspannung erforderlich ist, kann auch auf die Ventilschließfeder 30 verzichtet werden. In diesem Fall hält die Lochscheibe 26 unmittelbar die Ventilkugel 24 im Ventilgehäuse 12. Bei den dargestellten Ausführungsbeispielen, d, h. wenn die Ventilschließfeder 30 vorhanden ist, hält die Lochscheibe 26 bzw. das Halteelement unmittelbar die Ventilschließfeder 30, aber auch über die Ventilschließfeder 30 die Ventilkugel 24 indirekt im Ventilgehäuse 12.

Die im Ventilgehäuse 12 befestigte Lochscheibe 26 sorgt für einen konstanten Abstand zwischen dem Ventilsitz 18 und der Lochscheibe 26 und damit für eine konstante Vorspannkraft der Ventilkugel 24 gegen den Ventilsitz 18.

Die Lochscheibe 26 wird in axialer Richtung in das Ventilgehäuse 12 hineingepreßt. Der Außenumfang der Lochscheibe 26 und die nach innen weisende, durch den Zwischenraum 38 unterbrochene Umfangsfläche der Führungsrippen 20 sind so aufeinander abgestimmt, daß nach dem Einpressen der Lochscheibe 26 in das Ventilgehäuse 12 sich zwischen dem Außenumfang der Lochscheibe 26 und dem Innenumfang der Führungsrippen 20 eine hohe, die Lochscheibe 26 sicher im Ventilgehäuse 12 festhaltende Pressung entsteht. Dieses Festhalten der Lochscheibe 26 im Ventilgehäuse 12 kann noch verstärkt werden durch eine örtliche Verformung der Führungsrippen 20. Um das Einpressen zu erleichtern, sind die Führungsrippen 20 an ihren abströmseitigen Enden mit Fasen 34 versehen und eine in Einpreßrichtung vordere Randkante 36 der Lochscheibe 26 ist gerundet. Die Führungsrippen 20 halten die Lochscheibe 26 mit radialem Abstand zur Umfangswand 22 des Ventilgehäuses 12, es besteht also ein Zwischenraum 38 zwischen einem Außenrand der Lochscheibe 26 und einer Innenseite der Umfangswand 22. Bei dem bevorzugt ausgewählten Ausführungsbeispiel, bei dem vier Führungsrippen vorgesehen sind, setzt sich der Zwischenraum 38 zusammen aus vier Einzelzwischenräumen 38a, 38b, 38c und 38d (Fig. 3). Dieser Zwischenraum 38 bildet eine Durchströmöffnung zusätzlich zum Mittelloch 28 der Lochscheibe 26, so daß das erfindungsgemäße Rückschlagventil 10 insgesamt einen großen Durchströmquerschnitt aufweist. Sofern bei großer Druckdifferenz zwischen Zuström- und Abströmseite oder auch, wenn das Rückschlagventil 10 nicht mit einer Ventilschließfeder 30 versehen ist, die Ventilkugel 24 auf der Lochscheibe 26 aufsitzt und deren Mittelloch 28 verschließt, stellt der Zwischenraum 38 immer noch einen großen Durchströmquerschnitt zur Verfügung. Bei großer Druckdifferenz zwischen der Zuströmseite und der Abströmseite hebt die Ventilkugel 24 weit vom Ventilsitz 18 ab und die einzelnen Windungen der Ventilschließfeder 30 kommen relativ dicht zusammen, wodurch der durch das Mittelloch 28 strömende Anteil der Flüssigkeit im Bereich der Windungen gedrosselt wird. Wegen dem Zwischenraum 38 bleibt jedoch insgesamt noch ein genügend großer Durchströmquerschnitt übrig. Dies hat den Vorteil, daß die einzelnen Windungen der Ventilschließfeder 30 relativ dicht zusammenkommen können, weshalb das Rückschlagventil 10 insgesamt kurz gebaut sein kann.

Ferner macht sich beim Öffnen des Rückschlagventils 12 die Drosselung im Bereich der Windungen der Ventilschließfeder 30 weniger bemerkbar, weshalb die Ventilkugel 24 weniger stark zum Schwingen neigt und damit das vorgeschlagene Rückschlagventil 12 weniger unerwünschte Geräusche abgibt, dafür aber länger funktionsfähig bleibt.

Wegen dem Zwischenraum 38 kann ggf. auch ganz auf das Mittelloch 28 verzichtet werden.

Die Ventilkugel 24 hat einen kleineren Durchmesser als ein Innendurchmesser der Umfangswand 22 des Ventilgehäuses 12 stromab des Ventilsitzes 18, so daß auch im Bereich der Ventilkugel 24 ein großer Durchströmquerschnitt zur Verfügung steht. Beim vorgeschlagenen Rückschlagventil 12 steht, unabhängig von der augenblicklichen Stellung der Ventilkugel 24, querschnittsmäßig betrachtet, der gesamte Zwischenraum 38 als Durchströmquerschnitt zur Verfügung.

Das Ventilgehäuse 12 ist als Kunststoffspritzteil oder Metall und durch einen Umformvorgang, insbesondere durch Kaltschlagen hergestellt. Dabei sind Ventilsitz 18 und Führungsrippen 20 in einem Umformvorgang hergestellt, wodurch eine hohe Genauigkeit der Axialführung der Ventilkugel 24 durch die Führungsrippen 20 in Bezug auf den Ventilsitz 18 gewährleistet ist. Es läßt sich eine in radialer Richtung eng tolerierte Axialführung der Ventilkugel 24 verwirklichen.

Die in radialer Richtung betrachtet enge Führung des Ventilschließkörpers, bei den ausgewählten Ausführungsbeispielen der Ventilkugel 24, dient zur Reduzierung von unerwünschten Geräuschen, weil wegen der engen Führung der Ventilschließkörper weniger heftig gegen das Ventilgehäuse 12 schlagen kann. Auch der relativ große freie Durchströmquerschnitt zwischen dem Außenumfang der Ventilkugel 24 und der Innenseite der Umfangswand 22 des Ventilgehäuses 12, d. h. der Zwischenraum 38 zwischen den Führungsrippen 20, macht sich bei der beabsichtigten Reduzierung unerwünschter Geräusche ebenfalls günstig bemerkbar, weil infolge des relativ großen freien Zwischenraums 38 der Ventilschließkörper bzw. die Ventilkugel 24 weniger zum Schwingen neigt. Günstig ist insbesondere auch, daß der Zwischenraum 38 bereits bei geringem Hub der Ventilkugel 24 voll wirksam ist.

Der Ventilsitz 18 ist nach dem Kaltschlagen des Ventilgehäuses 12 nachgeprägt, um seine Dichtungsqualitiät zu erhöhen und seine Härte und damit Verschleißfestigkeit zu steigern.

Es ist, wie in Figur 2 dargestellt, vorgesehen, das erfindungsgemäße Rückschlagventil 10 in eine gestufte, fluidführende Bohrung 40 eines Gehäuses 62 einzusetzen, wobei der Dichtbund 14 des Ventilgehäuses 12 im Zusammenwirken mit der Bohrung 40 in dem Gehäuse 62 eine Preßpassung aufweist, so daß das Rückschlagventil 10 in der fluidführenden Bohrung 40 gehalten und abgedichtet ist. Eine Außenumfangsfläche des Dichtbundes 14 bildet eine Dichtfläche 42. Zusätzlich ist das Rückschlagventil 10 in der fluidführenden Bohrung 40 durch eine Verstemmung 44 gehalten und abgedichtet.

Um zu verhindern, daß die Preßpassung zwischen dem Dichtbund 14 und der fluidführenden Bohrung 40 den Ventilsitz 18 verformt, weist der Ventilsitz 18 axialen Abstand von der Dichtfläche 42 des Dichtbundes 14 auf. Dadurch wird auch das vorgesehene Radialspiel zwischen der Ventilkugel 24 und den Führungsrippen 20 durch die Preßpassung nicht beeinträchtigt.

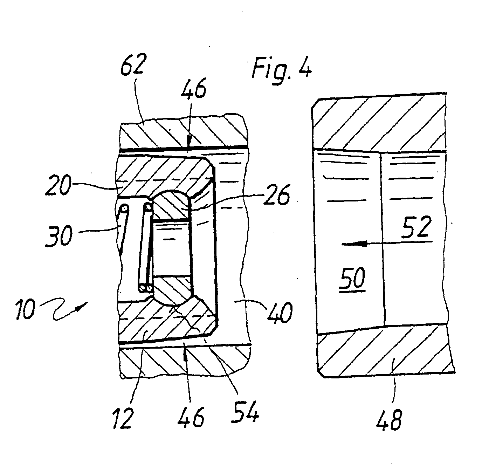

Figur 4 zeigt ein abströmseitiges Ende des Ventilgehäuses 12 einer abgewandelten Ausführungsform der Erfindung im Achsschnitt. Das Ventilgehäuse 12 ist im Bereich des Halteelements, das auch bei diesem Ausführungsbeispiel als Lochscheibe 26 ausgebildet ist, durch Krafteinwirkung von außen (Pfeile 46) radial nach innen verformt, wodurch sich die Lochscheibe 26 unter plastischer Verformung der Führungsrippen 20 in diese eindrückt. Dadurch wird der Halt der Lochscheibe 26 im Ventilgehäuse 12 erheblich gesteigert, eine Lösekraft, die notwendig ist, um die Lochscheibe 26 in axialer Richtung aus dem Ventilgehäuse 12 herauszudrücken wird auf das etwa 6 bis 8fache gesteigert verglichen mit einer lediglich eingepreßten Lochscheibe26. Die Umformung des Ventilgehäuses 12 radial nach innen erfolgt mit einem in Figur 4 rechts dargestellten Werkzeugstempel 48, welcher einen Innenkonus 50 aufweist, der axial, d. h. in Richtung des Pfeils 52 auf das Ventilgehäuse 12 (selbstverständlich bevor dieses in die fluidführende Bohrung 40 eingesetzt wird) aufgepreßt wird und dadurch das Ventilgehäuse 12 im Bereich der Lochscheibe 26 gleichmäßig über den gesamten Umfang mit der radial nach innen wirkenden Umformkraft 46 beaufschlagt.

Ein Außenrand 54 der in Figur 4 dargestellten Lochscheibe 26 ist ballig bzw. kugelig ausgebildet, um das Einpressen der Lochscheibe 26 in das Ventilgehäuse 12 zu erleichtern. Die Lochscheibe 26 des in Figur 4 dargestellten Ausführungsbeispiels der Erfindung ist, anders als die Lochscheibe 26 des in Figur 2 dargestellten Ausführungsbeispiels der Erfindung, spiegelbildlich zu einer gedachten Mittelebene der Lochscheibe 26 ausgebildet, so daß eine Orientierung der Lochscheibe 26 vor dem Einpressen nicht nötig und dadurch der Aufwand für die Herstellung des Rückschlagventils 10 verringert wird. Bei diesem Ausführungsbeispiel erfolgt die Führung der Ventilschließfeder 30 an der nach innen weisenden, umfangsmäßig unterbrochenen Umfangsfläche der Führungsrippen 20.

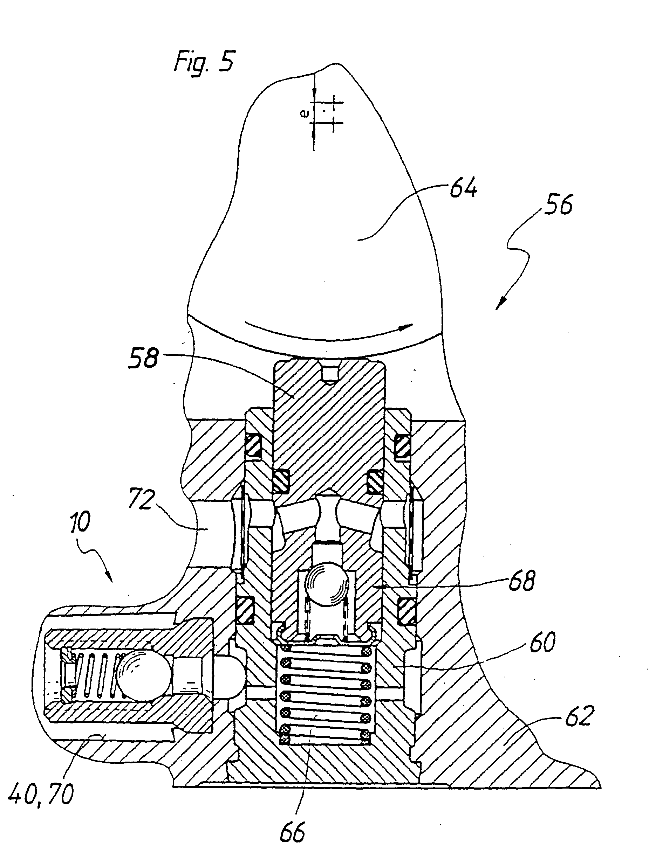

Figur 5 zeigt eine Kolbenpumpe 56 mit dem Rückschlagventil 10 aus Figuren 1 bis 3 gemäß der Erfindung. Die Kolbenpumpe 56 ist als Pumpe einer beispielsweise schlupfgeregelten, im übrigen nicht dargestellten, hydraulischen Fahrzeugbremsanlage vorgesehen. Derartige Kolbenpumpen 56 sind in Aufbau und Funktion an sich bekannt, weswegen sie nachfolgend nur kurz erläutert wird.

Die Kolbenpumpe 56 weist einen Kolben 58 auf, der in einer Laufbuchse 60 axial verschieblich geführt ist. Die Laufbuchse 60 ist in das Gehäuse 62, das beim bevorzugt ausgewählten Ausführungsbeispiel auch als Pumpengehäuse bezeichnet werden kann, fest eingesetzt. Zum Antrieb des Kolbens 58 dient ein elektromotorisch rotierend antreibbarer Exzenter 64 mit der Exzentrizität e, gegen dessen Umfang der Kolben 58 von einer Kolbenrückstellfeder 66 gedrückt wird. Ein federbelastetes Rückschlagventil ist als Einlaßventil 68 in den Kolben 58 integriert.

Als Auslaßventil ist das erfindungsgemäße Rückschlagventil 10 in das Gehäuse 62 eingesetzt. Bei dem für die Figur 5 bevorzugt ausgewählten Ausführungsbeispiel dient die fluidführende Bohrung 40 als Auslaßkanal 70 der Kolbenpumpe 56. Das Rückschlagventil 10 ist wie anhand der Figuren 1 bis 4 beschrieben in die fluidführende Bohrung 40 bzw. in den Auslaßkanal 70 (Fig. 5) eingebaut und abgedichtet. Die Bohrung 40 bzw. der Auslaßkanal 70 ist radial zur Kolbenpumpe 56 im Pumpengehäuse 62 angebracht. Anstelle der radialen Anordnung des Rückschlagventils 10 wäre auch eine axiale Anordnung insbesondere in Verlängerung des Kolbens 58 möglich (nicht dargestellt). Ebenso wie als Auslaßventil kann das erfindungsgemäße Rückschlagventil 10 wahlweise auch als Einlaßventil der Kolbenpumpe 56 Verwendung finden (nicht dargestellt). Es kann dazu beispielsweise in eine Einlaßbohrung 72 des Gehäuses 62 eingesetzt oder in den Kolben 58 integriert werden. Mit anderen Worten, auch das in der Figur 5 gezeigte, im Kolben 58 integrierte Einlaßventil 68 kann in gleicher Weise wie das anhand der Figuren 1 bis 4 erläuterte Rückschlagventil 10 gebaut sein, wobei in diesem Fall der Kolben 58 der Kolbenpumpe 56 an die Stelle des Gehäuses 62 tritt.

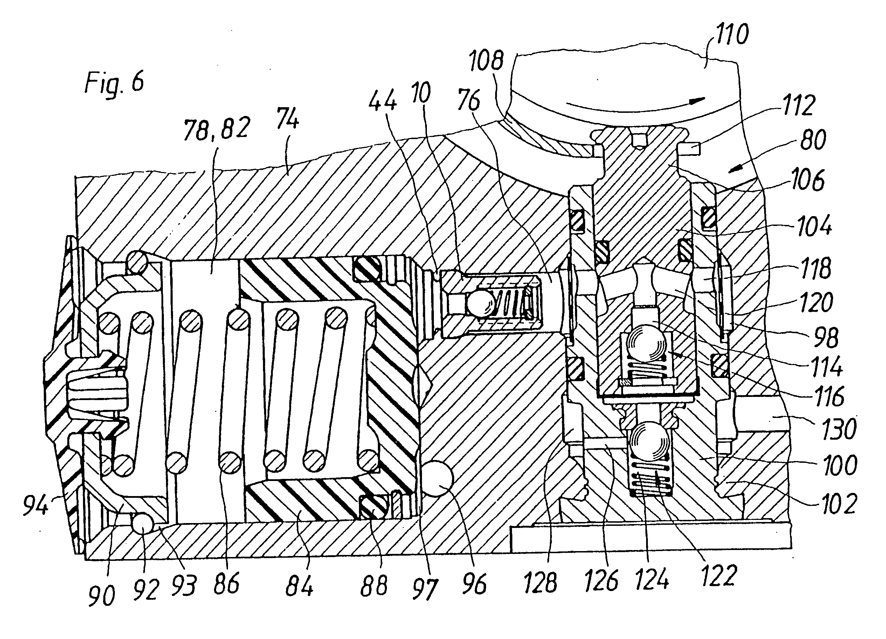

Figur 6 zeigt einen Ausbruch eines Hydraulikblocks 74 einer eine Schlupfregeleinrichtung aufweisenden Fahrzeugbremsanlage, die das Rückschlagventil 10 aus Figuren 1 bis 3 aufweist, gemäß der Erfindung. Das Rückschlagventil 10 ist in eine Verbindungsbohrung 76 eingesetzt, die von einem Hydrospeicher 78 zu einer Saugseite einer Kolbenpumpe 80 führt. Das Rückschlagventil 10 ist vom Hydrospeicher 78 zur Kolbenpumpe 80 durchströmbar. In den Hydraulikblock 74 sind weitere, der klaren Darstellung wegen in der Zeichnung nicht dargestellte, hydraulische Bauelemente wie Magnetventile und Dämpfer eingesetzt und hydraulisch miteinander, mit dem Hydrospeicher 78 und mit der Kolbenpumpe 80 verschaltet. Vom Hydraulikblock 74 ist in der Zeichnung lediglich ein die Kolbenpumpe 80, das Rückschlagventil 10 sowie den Hydrospeicher 78 umfassendes Bruchstück dargestellt.

Der Hydrospeicher 78 weist eine zylindrische Sackbohrung 82 als Speicherkammer auf, in die ein Speicherkolben 84 axial verschieblich eingesetzt ist. Der Speicherkolben 84 wird von einer Speicherfeder 86 in Form einer Schraubendruckfeder in Richtung eines Grundes der die Speicherkammer 82 bildenden Sackbohrung beaufschlagt. Mit einem O-Ring 88 ist der Speicherkolben 84 in der Speicherkammer 82 abgedichtet.

Die Speicherfeder 86 stützt sich gegen einen Verschlußdeckel 90 ab, der mittels eines Sprengrings 92, welcher in eine Nut 93 in der Speicherkammer 82 eingesetzt ist, in einer offenen Stirnseite der die Speicherkammer 82 bildenden Sackbohrung angebracht ist. Um ein Eindringen von Schmutz oder Wasser in die Speicherkammer 82 zu verhindern, ist in den Verschlußdeckel 90 eine Verschlußkappe 94 eingeklippst, welche die offene Stirnseite der Speicherkammer 82 abdeckt und einen Luftaustausch zwischen der Speicherkammer 82 und der Umgebung ermöglicht.

Über einen Zuströmkanal 96, der am Grund der Speicherkammer 82 mündet, ist der Hydrospeicher 78 unter Zwischenschaltung eines nicht dargestellten Magnet-Auslaßventils in an sich bekannter Weise an einen ebenfalls nicht dargestellten Radbremszylinder hydraulisch angeschlossen. Der Hydrospeicher 78 dient zur (vorübergehenden) Aufnahme von mittels des nicht dargestellten Auslaßventils bei einer Schlupfregelung aus dem Radbremszylinder ausgelassener Bremsflüssigkeit. Auch bei von der Speicherfeder 86 gegen den Grund der Speicherkammer 82 gedrücktem Speicherkolben 84 kommuniziert der Zuströmkanal 96 durch einen Ringraum 97 zwischen einer Stirnfläche des Speicherkolbens 84 und dem Grund der Speicherkammer 82 und die Verbindungsbohrung 76 mit der Saugseite der Kolbenpumpe 80. Das in die Verbindungsbohrung 76 eingesetzte Rückschlagventil 10 ermöglicht eine Zuströmung von aus dem nicht dargestellten Radbremszylinder ausgelassener Bremsflüssigkeit zur Kolbenpumpe 80, verhindert jedoch ein Rückströmen in Richtung des Hydrospeichers 78 bzw. in den Radbremszylinder.

Die Verbindungsbohrung 76 ist exzentrisch nahe eines Umfangs der Speicherkammer 82 achsparallel zur Speicherkammer 82 am Grund der Speicherkammer 82 im Hydraulikblock 74 angebracht. Sie mündet radial in eine Zylinderbohrung 98 im Hydraulikblock 74, in die die Kolbenpumpe 80 eingesetzt ist. Aufgrund eines um ein Vielfaches größeren Durchmesser der Speicherkammer 82 in Bezug auf die Verbindungsbohrung 76 ist das Einsetzen des Rückschlagventils 10 in die Verbindungsbohrung 76 und das Anbringen einer Verstemmung 44, die das Rückschlagventil 10 in der Verbindungsbohrung 76 fixiert und eine Abdichtung bewirkt, problemlos möglich. Das Einsetzen des Rückschlagventils 10 in die Verbindungsbohrung 76 erfolgt selbstverständlich vor dem Einsetzen des Speicherkolbens 84 und der übrigen Teile des Hydrospeichers 78 in die Speicherkammer 82.

Die Kolbenpumpe 80 weist in an sich bekannter Weise eine Laufbuchse 100, die in die Zylinderbohrung 98 eingesetzt und durch eine Verstemmung 102 in sog. self-clinch-Technik gehalten und Druckdicht abgedichtet ist.

In der Laufbuchse 100 ist ein Pumpenkolben 104 axialverschieblich aufgenommen, der einen mit ihm einstückigen, aus der Laufbuchse 100 vorstehenden Kolbenkopf 106 aufweist. Der Kolbenkopf 106 wird von einer Bügelfeder 108 in Anlage am Umfang eines elektromotorisch rotierend antreibbaren Exzenters 110 gehalten, wobei die Bügelfeder 108 den Exzenter 110 umgreift und mit einem gegabelten Ende 112 mit dem Kolbenkopf 106 in Eingriff steht. Durch rotierenden Antrieb des Exzenters 110 wird der Pumpenkolben 104 zu einer Hubbewegung in der Laufbuchse 100 angetrieben.

In ein gestuftes Sackloch 114 des Kolbens 104, ist in an sich bekannter Weise ein federbelastetes Rückschlagventil als Einlaßventil 116 der Kolbenpumpe 80 eingesetzt. Ein Pumpeneinlaß erfolgt aus der Verbindungsbohrung 76 durch Radialbohrungen 118 in der Laufbuchse 100, Querbohrungen 120 im Kolben 106 in das Sackloch 114.

Als Auslaßventil 122 ist in an sich bekannter Weise ein federbelastetes Rückschlagventil in ein Sackloch 124 in ein geschlossenes, dem Exzenter 110 abgewandtes Stirnende der Laufbuchse 100 eingesetzt. Ein Pumpenauslaß erfolgt aus dem Sackloch 124, welches das Auslaßventil 122 aufnimmt, durch eine Radialbohrung 126 in der Laufbuchse 100, einen die Laufbuchse 100 umgebenden Ringkanal 128 im Hydraulikblock 74 in eine radiale Auslaßbohrung 130 des Hydraulikblocks 74.

## Patentansprüche

1. Rückschlagventil (10) mit einem Ventilgehäuse (12), welches einen Ventilsitz (18) und in Längsrichtung verlaufende Führungsrippen (20) aufweist, die einen im Ventilgehäuse (12) aufgenommenen Ventilschließkörper (24) zum Ventilsitz (18) ausrichtend beweglich führen, und mit einem Halteelement (26), welches den Ventilschließkörper (24) zwischen sich und dem Ventilsitz (18) haltend im Ventilgehäuse (12) angebracht ist, wobei das Halteelernent (26) an den Führungsrippen (20) angebracht ist und wobei zwischen dem Halteelement (26) und einer Innenseite einer Umfangswand (22) des Ventilgehäuses (12) ein Zwischenraum (38) besteht, **dadurch gekennzeichnet, dass** das Haltelement (26) in axialer Richtung in das Ventilgehäuse (12) hineingepresst ist.

2. Rückschlagventil nach Anspruch 1, **dadurch gekennzeichnet, daß** das Halteelement (26) scheibenförmig ist.

3. Rückschlagventil nach Anspruch 1 oder 2, **dadurch gekennzeichnet, daß** das Halteelement (26) mindestens ein Durchgangsloch (28) als Ausströmöffnung des Rückschlagventils (10) aufweist.

4. Rückschlagventil nach Anspruch 1, **dadurch gekennzeichnet, daß** Ventilgehäuse (12) ein Umformteil insbesondere ein Kaltumformteil, insbesondere ein Kaltschlagteil ist.

5. Rückschlagventil nach Anspruch 1, **dadurch gekennzeichnet, daß** das Ventilgehäuse (12) einen radial nach außen überstehenden, umlaufenden Dichtbund (14) aufweist.

6. Rückschlagventil nach Anspruch 1, **dadurch gekennzeichnet, daß** der Ventilsitz (18) einen axialen Abstand von einer am Außenumfang des Ventilgehäuses (12) umlaufend ausgebildeten Dichtfläche (42) aufweist.

7. Rückschlagenventil nach Anspruch 1, **dadurch gekennzeichnet, daß** im Bereich des Halteelements (26) das Ventilgehäuse (12) radial nach innen umgeformt ist.

8. Rückschlagventil nach Anspruch 1 oder 2, **dadurch gekennzeichnet, daß** ein Außenrand (54) des Halteelements (26) ballig ist.

9. Rückschlagventil nach Anspruch 1, **dadurch gekennzeichnet, daß** das Rückschlagventil (10) eine Ventilschließfeder (30) aufweist, die sich gegen das Halteelement (26) abstützt und den Ventilschließkörper (24) gegen den Ventilsitz (18) beaufschlagt.

10. Fahrzeugbremsanlage, **dadurch gekennzeichnet, daß** sie ein Rückschlagventil (10) nach einem der vorhergehenden Ansprüche aufweist.

11. Fahrzeugbremsanlage nach Anspruch 10, **dadurch gekennzeichnet, daß** das Rückschlagventil (10) unter Zwischenschaltung eines Auslaßventils hydraulisch an einen Radbremszylinder angeschlossen und einer Saugseite einer Pumpe (80) vorgeschaltet ist, wobei das Rückschlagventil (10) in Richtung der Pumpe (80) durchströmbar ist.

12. Fahrzeugbremsanlage nach Anspruch 9, **dadurch gekennzeichnet, daß** das Rückschlagventil (10) einem Hydrospeicher (78) und einer Saugseite einer Pumpe (80) zwischengeschaltet ist, und daß das Rückschlagventil (10) in Richtung der Pumpe (80) durchströmbar ist.

13. Fahrzeugbremsanlage nach Anspruch 10, **dadurch gekennzeichnet, daß** die Fahrzeugbremsanlage eine Schlupfregeleinrichtung aufweist.

14. Kolbenpumpe mit einem Kolben, der axialverschieblich geführt in einer Zylinderbohrung eines Pumpengehäuses aufgenommen und der zu einer hin- und hergehenden Hubbewegung antreibbar ist, **dadurch gekennzeichnet, daß** die Kolbenpumpe (56) ein Rückschlagventil (10) nach einem der vorhergehenden Ansprüche aufweist.

15. Kolbenpumpe nach Anspruch 14, **dadurch gekennzeichnet, daß** das Rückschlagventil (10) als Einlaßventil der Kolbenpumpe (56) dient.

16. Kolbenpumpe nach Anspruch 14 oder 15, **dadurch gekennzeichnet, daß** das Rückschlagventil (10) als Auslaßventil der Kolbenpumpe (56) dient.

## Claims

1. Non-return valve (10) having a valve housing (12) which has a valve seat (18) and guide ribs (20) which run in the longitudinal direction and which movably guide a valve closing body (24) accommodated in the valve housing (12) so as to orientate it with respect to the valve seat (18), and having a securing element (26) which is mounted in the valve housing (12) so as to secure the valve closing body (24) between itself and the valve seat (18), the securing element (26) being mounted on the guide ribs (20) and there being an intermediate space (38) between the securing element (26) and an inner side of a circumferential wall (22) of the valve housing (12), **characterized in that** the securing element (26) is pressed into the valve housing (12) in the axial direction.

2. Non-return valve according to Claim 1, **characterized in that** the securing element (26) is disc-shaped.

3. Non-return valve according to Claim 1 or 2, **characterized in that** the securing element (26) has at least one through-hole (28) as an outflow opening of the non-return valve (10).

4. Non-return valve according to Claim 1, **characterized in that** the valve housing (12) is a formed part, in particular a cold formed part, in particular a cold impacted part.

5. Non-return valve according to Claim 1, **characterized in that** the valve housing (12) has a circumferential sealing collar (14) which protrudes radially towards the outside.

6. Non-return valve according to Claim 1, **characterized in that** the valve seat (18) is at an axial distance from a sealing face (42) which is formed all around the outer circumference of the valve housing (12).

7. Non-return valve according to Claim 1, **characterized in that** the valve housing (12) is shaped radially inwards in the region of the securing element (26).

8. Non-return valve according to Claim 1 or 2, **characterized in that** an external edge (54) of the securing element (26) is crowned.

9. Non-return valve according to Claim 1, **characterized in that** the non-return valve (10) has a valve closing spring (30) which is supported against the securing element (26) and pushes the valve closing body (24) against the valve seat (18).

10. Vehicle brake system, **characterized in that** it has a non-return valve (10) according to one of the preceding claims.

11. Vehicle brake system according to Claim 10, **characterized in that** the non-return valve (10) is hydraulically connected to a wheel brake cylinder with the intermediate connection of an outlet valve, and is connected upstream of a suction side of a pump (80), it being possible for fluid to flow through the non-return valve (10) in the direction of the pump (80).

12. Vehicle brake system according to Claim 9, **characterized in that** the non-return valve (10) is connected between a hydraulic accumulator (78) and a suction side of a pump (80), and **in that** fluid can flow through the non-return valve (10) in the direction of the pump (80).

13. Vehicle brake system according to Claim 10, **characterized in that** the vehicle brake system has a slip control device.

14. Piston pump having a piston which is accommodated and guided in an axially displaceable fashion in a cylinder bore of a pump housing and which can be driven in a reciprocating stroke movement, **characterized in that** the piston pump (56) has a non-return valve (10) according to one of the preceding claims.

15. Piston pump according to Claim 14, **characterized in that** the non-return valve (10) serves as an inlet valve of the piston pump (56).

16. Piston pump according to Claim 14 or 15, **characterized in that** the non-return valve (10) serves as an outlet valve of the piston pump (56).

## Revendications

1. Clapet anti-retour (10), comprenant un boîtier de soupape (12) qui présente un siège de soupape (18) et des nervures de guidage (20) qui s'étende en direction longitudinale et guident de manière mobile un corps de fermeture de soupape (24) reçu dans le boîtier de soupape (12) en direction du siège de soupape (18), avec un élément de maintien (26) disposé dans le boîtier de soupape (12) pour maintenir le corps de fermeture de soupape (24) entre lui-même et le siège de soupape (18), l'élément de maintien (26) se trouvant au niveau des nervures de guidage (20), et avec un espace intermédiaire (38) prévu entre l'élément de maintien (26) et une face intérieure d'une paroi périphérique (22) du boîtier de soupape (12),
**caractérisé en ce que**
l'élément de maintien (26) est pressé dans le boîtier de soupape (12) en direction axiale.

2. Clapet anti-retour selon la revendication 1,
**caractérisé en ce que**
l'élément de maintien (26) présente la forme d'un disque.

3. Clapet anti-retour selon la revendication 1 ou 2,
**caractérisé en ce que**
l'élément de maintien (26) présente au moins un trou de passage (28) en tant qu'orifice de sortie du clapet anti-retour (10).

4. Clapet anti-retour selon la revendication 1,
**caractérisé en ce que**
le boîtier de soupape (12) est une pièce de transformation, notamment une pièce de transformation à froid, notamment une pièce de frappe à froid.

5. Clapet anti-retour selon la revendication 1,
**caractérisé en ce que**
le boîtier de soupape (12) présente un collet d'étanchéité (14) circulaire saillant radialement vers l'extérieur.

6. Clapet anti-retour selon la revendication 1,
**caractérisé en ce que**
le siège de soupape (18) présente une distance axiale par rapport à une surface d'étanchéité (42) circulaire prévue à la périphérie extérieure du boîtier de soupape (12).

7. Clapet anti-retour selon la revendication 1,
**caractérisé en ce que**
dans la zone de l'élément de maintien (26) le boîtier de soupape (12) est replié radialement vers l'intérieur.

8. Clapet anti-retour selon la revendication 1 ou 2,
**caractérisé en ce qu'**
un bord extérieur (54) de l'élément de maintien (26) est bombé.

9. Clapet anti-retour selon la revendication 1,
**caractérisé en ce que**
le clapet anti-retour (10) présente un ressort de fermeture de soupape (30) qui s'appuie contre l'élément de maintien (26) et sollicite le corps de fermeture de soupape (24) contre le siège de soupape (18).

10. Installation de frein de véhicule,
**caractérisée par**
un clapet anti-retour (10) selon l'une quelconque des revendications précédentes.

11. Installation de frein de véhicule selon la revendication 10,
**caractérisée en ce que**
le clapet anti-retour (10) est raccordé hydrauliquement à un cylindre de frein de roue par l'intermédiaire d'une soupape d'échappement et monté en amont d'un côté d'aspiration d'une pompe (80), le clapet anti-retour (10) pouvant être traversé en direction de la pompe (80).

12. Installation de frein de véhicule selon la revendication 9,
**caractérisée en ce que**
le clapet anti-retour (10) est placé entre un accumulateur hydraulique (78) et un côté d'aspiration d'une pompe (80), et **en ce que** le clapet anti-retour (10) peut être traversé en direction de la pompe (80).

13. Installation de frein de véhicule selon la revendication 10,
**caractérisée par**
un dispositif de régulation de patinage.

14. Pompe à piston comprenant un piston logé mobile axialement dans un alésage de cylindre d'un carter de pompe et qui peut être entraîné en un mouvement de course de va-et-vient,
**caractérisée en ce que**
la pompe à piston (56) présente un clapet anti-retour (10) selon l'une quelconque des revendications précédentes.

15. Pompe à piston selon la revendication 14,
**caractérisée en ce que**
le clapet anti-retour (10) sert de soupape d'admission de la pompe à piston (56).

16. Pompe à piston selon la revendication 14 ou 15,
**caractérisée en ce que**
le clapet anti-retour (10) sert de soupape d'échappement de la pompe à piston (56).
